# EUROPÄISCHE PATENTSCHRIFT

(11) **EP 3 142 338 B1**
(45) Veröffentlichungstag und Bekanntmachung des Hinweises auf die Patenterteilung: **07.06.2023**
(21) Anmeldenummer: 16188078.6
(22) Anmeldetag: 09.09.2016
(51) Int. Cl.: H04L 67/52, G06F 21/00, H04L 9/40, H04W 12/02, H04L 67/04

(54) **ORTSGEBUNDENE BEREITSTELLUNG EINES DIENSTES IN EINEM NETZWERK**
LOCAL PROVISION OF A SERVICE ON A NETWORK
MISE À DISPOSITION SPÉCIFIQUE AU LIEU D'UN SERVICE SUR UN RÉSEAU

(30) Priorität: 11.09.2015 DE 102015115386
(43) Veröffentlichungstag der Anmeldung: 15.03.2017
(73) Patentinhaber: Deutsche Telekom AG, 53113 Bonn (DE)
(72) Erfinder: MAUERWERK, Mark, 61462 Königstein (DE)
(74) Vertreter: Brandt & Nern Patentanwälte

(56) Entgegenhaltungen:
- WO-A2-02/35766
- DE-A1-102013 102 487
- US-A1- 2005 170 851
- US-B1- 7 433 673
- US-B1- 9 084 013

## Beschreibung

Die Erfindung betrifft eine Lösung zur ortsgebundenen Bereitstellung eines Dienstes in einem Netzwerk. Ein entsprechender Dienst betrifft hierbei beispielsweise die ortsgebundene Bereitstellung eines Contents, der über das Netzwerk verbreitet wird. Die erfindungsgemäße Lösung bezieht sich auf die Bereitstellung eines Dienstes, welcher nur innerhalb eines lokal bestimmten Nutzungsbereiches mittels eines dazu ausgestatteten, mit dem Netzwerk nichtleitungsgebunden, sondern vorzugsweise über Funk gekoppelten mobilen Endgeräts nutzbar ist. Eine ein solches Endgerät in dem Nutzungsbereich verwendende Person bleibt im Zusammenhang mit der Dienstnutzung vollständig anonym. Gegenstände der Erfindung sind ein entsprechendes Verfahren und ein zu dessen Durchführung ausgebildetes System. Zentrales Element der vorgeschlagenen Lösung ist in diesem Zusammenhang die Lokalisierung des zur Nutzung des über das Netzwerk bereitgestellten Contents verwendeten Endgeräts durch Geolokalisierung.

Gemäß dem bereits eingangs erwähnten Beispiel bezieht sich die Lösung entsprechend einer bevorzugten Anwendung auf die ortsgebundene Bereitstellung von Content. Bei der Erläuterung der Ausführungsbeispiele, ansonsten aber zumindest überwiegend, soll daher die vorgeschlagene Lösung nachfolgend insbesondere im Zusammenhang mit dieser bevorzugten Anwendung dargestellt werden, ohne dass die Erfindung jedoch hierauf beschränkt wäre.

Aus der DE 10 2013 102 487 A1 ist eine Lösung bekannt, die einen ortgebundenen Zugriff auf digitale Daten, insbesondere auf mediale Inhalte ermöglichen soll. Die Berechtigung für den Zugriff auf entsprechende, durch einen so genannten Nutzungsserver bereitgestellte digitale Daten wird gemäß der beschriebenen Lösung über eine ID vermittelt, die von einem zur Herstellung einer Verbindung mit dem Nutzungsserver genutzten Gateway bereitgestellt wird. Im Falle einer Anforderung digitaler Inhalte mittels eines mobilen Endgeräts wird diese ID durch eine der Darstellung der Inhalte dienende Anwendung des Endgeräts von dem lokalen Gateway erlangt und an den Nutzungsserver weitergeleitet. Auf der Basis der zwischen dem Nutzungsserver und dem Gateway über das Zertifikat bestehenden Vertrauensbeziehung ist dann dem mobilen Endgerät mit der dafür ausgebildeten Anwendung beziehungsweise App eine Nutzung der digitalen Inhalte mittels eines von dem Nutzungsserver übermittelten Tokens möglich, solange es sich innerhalb eines Netzwerksegmentes mit dem Gateway befindet.

Genau genommen handelt es sich insoweit bei der in der Druckschrift beschriebenen Lösung nicht um eine Lösung zur ortgebundenen Nutzung digitaler Daten, da die Nutzungserlaubnis über die von dem Gateway bereitgestellte ID vermittelt wird und das Gateway nicht zwingend ortsfest angeordnet sein muss. Auch ist im Hinblick auf die Bereitstellung der ID durch das Gateway und darauf, dass die ID durch eine zur Nutzung der digitalen Inhalte verwendete Anwendung an den Nutzungsserver weitergeleitet wird, deren Vertrauenswürdigkeit möglicherweise ebenfalls nicht sichergestellt. Letzteres ist allenfalls durch einen hohen Aufwand für die Programmierung der Anwendung und für deren Absicherung zu bewerkstelligen.

Ferner ist im Rahmen dieser Lösung eine anonyme Nutzung digitaler Inhalte mittels entsprechender Endgeräte möglicherweise nicht gewährleistet. Anzustreben ist aber eine Lösung, welche auf einer möglichst genauen und zuverlässigen Lokalisierung mobiler Endgeräte bei einem ortsgebundenen Zugriff auf digitale Daten beruht sowie eine anonyme Nutzung der Daten mittels dieser Endgeräte gewährleistet.

Zur Positionsbestimmung mobiler Einheiten beziehungsweise mobiler Endgeräte im Sinne einer Geolokalisation sind bereits unterschiedliche Verfahren bekannt geworden. Das wohl bekannteste Verfahren basiert auf der Verwendung des GPS zur Lokalisierung von mit entsprechenden GPS-Empfängern ausgestatteten, selbst mobilen oder in einem Fahrzeug mitgeführten Endgeräten.

Darüber hinaus ist beispielsweise die Geolokalisierung durch WLAN-basierte Ortung bekannt. Hierbei werden von kommerziellen Hotspots, Firmennetzwerken oder privaten, WLAN-basierten Heimnetzwerken ausgesendete Funksignale durch ein diese empfangendes mobiles Endgerät ausgewertet, welches auf der Grundlage einer Kreuzpeilung seine eigene Position bestimmt. Eine entsprechende Lokalisierungsinformation steht im Falle einer Verwendung des GPS vorzugsweise in Form geografischer Längen- und Breitenangaben, für die weitere Verwendung durch unterschiedliche Applikationen zur Verfügung. Gemeinsam ist den vorgenannten Verfahren, dass die Lokalisierung durch die mobile Einheit beziehungsweise durch das mobile Endgerät selbst erfolgt. Als nachteilig ist es hierbei anzusehen, dass Applikationen beziehungsweise Anwendungen, welche sich auf entsprechende, durch das mobile Endgerät selbst gewonnene Lokalisierungsinformationen stützen, nicht sicher sein können, dass diese Informationen auch vertrauenswürdig sind.

Insofern ist es aus der Sicht von Dienstanbietern, wie beispielsweise Contentanbietern, welche ihre Dienstleistungen aus den unterschiedlichsten Gründen ortsgebunden anbieten, wünschenswert, die Vertrauenswürdigkeit von Lokalisierungsinformationen, betreffend den jeweiligen Standort eines mobilen Endgeräts, mittels eigener oder durch einen kommerziellen Betreiber unterhaltener Einrichtungen sicherzustellen. Allerdings sind bei der Ortung mobiler Endgeräte rechtliche Rahmenbedingungen zu beachten, wonach insbesondere eine Zuordnung von Lokalisierungsdaten zu Teilnehmeridentitätsdaten ohne Zustimmung des Teilnehmers, also des Nutzers eines entsprechenden mobilen Endgeräts, nicht erlaubt ist. Es ist demnach das Recht auf informationelle Selbstbestimmung der Nutzer mobiler Endgeräte in Einklang zu bringen mit den berechtigten Interessen des jeweiligen Dienstanbieters, welcher beispielsweise einen literarischen Content aus urheberrechtlichen Gründen nur innerhalb eines Ladengeschäfts temporär unentgeltlich zugänglich machen darf.

Einen möglichen Lösungsansatz hierfür stellt eine als Place Lab unter http://www.vs.inf.ethz.ch/edu/SS2005/DS/reports/08.1-localisation-report.pdf bekannt gewordene Lösung dar. Place Lab besteht aus drei grundlegenden Teilen, nämlich aus bereits vorhandenen Funksendern in einer jeweiligen Umgebung, aus einer Datenbank zur Verwaltung von Daten, der bereits vorhandenen bekannten Funksender und aus einem Client. Place Lab beschreibt eine Lösung, die unabhängig von Lokalisierungstechniken eines mobilen Endgeräts selbst (wie bereits erwähnt, zum Beispiel GPS) arbeitet und mit relativ hoher Genauigkeit bei der Ortung die Lokalisation eines mobilen Endgeräts, also dessen jeweiligen momentanen Aufenthaltsort, bestimmen kann. Das Problem hierbei ist allerdings, dass ein die Ortung anbietendes Unternehmen ein regelmäßiges Update der Daten zu den Koordinaten der Sender ausführen muss, um diese Lösung effektiv einsetzen zu können. Ein solcher Dienst wird von entsprechenden Service Providern angeboten. Von diesen werden regelmäßig Verkehrswege mit einem, mittels GPS genau positionierbaren Wagen befahren und mittels Empfangsgeräten im Wagen, alle Signale von verschiedenen Sendern empfangen, kartographiert und als Information tabellarisch festgehalten. Als Identifikationsmittel dienen die ID's der Sender. Dieses Vorgehen ist mit einem sehr großen Aufwand verbunden. Zudem ist das Verfahren vergleichsweise unsicher, da die Funkzellen in der Praxis häufiger unerwartet ausgeschaltet oder umpositioniert werden. So können, eventuelle Missbrauchsszenarien - wenn überhaupt - daher nur mit großem Aufwand vermieden werden.

Aufgabe der Erfindung ist es, die zuvor aufgezeigten Nachteile des Standes der Technik zu beseitigen. Hierzu ist eine Lösung anzugeben, welche zum Zweck einer ortsgebundenen Bereitstellung eines Dienstes in einem Netzwerk die Gewinnung von genauen und vertrauenswürdigen Lokalisierungsinformationen auf der Grundlage einer anonymen Ortung von zur Nutzung des bereitgestellten Dienstes verwendeten mobilen Endgeräten ermöglicht.

Die Aufgabe wird durch ein Verfahren mit den Merkmalen des Patentanspruchs 1 gelöst. Ein die Aufgabe lösendes, zur Durchführung des Verfahrens ausgebildetes System ist durch die Merkmale des unabhängigen Sachanspruchs charakterisiert. Vorteilhafte Aus- und Weiterbildungen der Erfindung sind durch die jeweiligen Unteransprüche gegeben.

Gemäß dem vorgeschlagenen Verfahren zur ortsgebundenen Bereitstellung eines Dienstes in einem Netzwerk wird der betreffende Dienst nur innerhalb eines lokal bestimmten Nutzungsbereichs zur Nutzung mittels eines mobilen Endgeräts bereitgestellt. Das vorgenannte mobile Endgerät, wie beispielsweise ein Smartphone oder ein Tablet-PC, ist hierbei mit dem Netzwerk nichtleitungsgebunden (beziehungsweise kabellos, nämlich vorzugsweise über Funk) gekoppelt. Von einer das betreffende Endgerät mit sich führenden Person ist der Dienst, welcher von mindestens einer ebenfalls mit dem Netzwerk gekoppelten Diensteinrichtung erbracht wird, mittels dieses mobilen Endgeräts unter Verwendung einer auf diesem gestarteten, von einer Verarbeitungseinheit des mobilen Endgeräts verarbeiteten Programmanwendung (im Weiteren auch App) nutzbar. Die Anwesenheit des zur Dienstnutzung verwendeten mobilen Endgeräts in dem Nutzungsbereich wird durch Geolokalisierung dieses Endgeräts festgestellt, wobei die Person, welche das Endgerät hierzu mit sich führt anonym bleibt und ihre Identität weder dem den Dienst bereitstellenden Dienstanbieter noch dem Betreiber des gemanagten Netzes oder dem Betreiber des später zu beschreibenden, für die Durchführung des Verfahrens geeigneten Systems, bei welchem es sich regelmäßig auch um den Betreiber des gemanagten Netzes handelt, bekannt wird.

Bei dem ortsgebunden bereitgestellten Dienst kann es sich um einen beliebigen Dienst handeln, der eine als Netzwerk ausgebildete, telekommunikative Infrastruktur und/oder eine als Netzwerk ausgebildete Infrastruktur zur Datenübertragung nutzt. Beispielhaft hierfür seien Dienste zur Inhouse-Navigation und Dienste zur Bereitstellung von Content, wie literarische oder mediale Inhalte, genannt. Wie vorstehend ausgeführt, bleibt eine einen entsprechenden Dienst mittels eines mobilen Endgerätes nutzende Person sowohl bei der Nutzungsanfrage als auch bei der eventuellen späteren Nutzung des Dienstes anonym. Wenn sich die betreffende Person in dem Nutzungsbereich für den Dienst aufhält, wird zwar wird die Anwesenheit des von ihr zur Dienstnutzung verwendeten Endgeräts in dem Nutzungsbereich festgestellt. Jedoch bleibt auch das Endgerät insoweit anonym, als dass von diesem keine technischen Gerätespezifikationen erfasst werden, da letztlich - wie noch zu zeigen sein wird - auch die Anwesenheit des mobilen Endgeräts in dem Nutzungsbereich nur indirekt festgestellt wird.

Erfindungsgemäß erfolgt die Geolokalisierung des mobilen Endgeräts mit Hilfe von Netzwerkendpunkten mindestens eines von dem für die Contentverbreitung genutzten Netzwerk umfassten gemanagten Netzes. Hierbei bilden die vorgenannten Netzwerkendpunkte "trusted" Endpunkte, das heißt vertrauenswürdige Endpunkte aus, welche das von einem Netzwerkbetreiber unterhaltene, gemanagte Netz gegenüber teilnehmerseitig an dieses Netz angebundenen Einheiten, wie beispielsweise einem zur Datenübertragung über GSM, GPRS, UMTS oder LTE genutzten Mobiltelefon (Smartphone) oder einem mittels eines WLAN-Routers beziehungsweise WIFI-Routers an einem Festnetzanschluss verwendeten mobilen Endgerät, terminieren. Die Vertrauenswürdigkeit der trusted Netzwerkendpunkte ergibt sich hierbei daraus, dass sie einen teilnehmerseitig nicht beeinflussbaren Bestandteil eines gemanagten Netzwerks darstellen, dessen genauer geografischer Standort dem insoweit als vertrauenswürdige Autorität beziehungsweise Instanz angesehenen Netzwerkbetreiber stets (auch im Falle eventueller baulicher Veränderungen) bekannt ist.

Die Geolokalisierung mit Hilfe dieser trusted Netzwerkendpunkte erfolgt dabei, indem das mobile Endgerät nach dem Start der bereits angesprochenen, die Nutzung des Contents ermöglichenden App im Wege eines Polling wiederholt eine anonyme Nutzungsanfrage aussendet. Mit dem Start der genannten App gibt der Nutzer des betreffenden Endgeräts lediglich bekannt, dass er möglicherweise an der Nutzung eines durch den die App verbreitenden Dienstanbieter beziehungsweise durch den Dienstanbieter, in dessen Namen die App verbreitet wird, bereitgestellten Contents interessiert ist.

Wird eine entsprechende anonyme Nutzungsanfrage durch einen zur Geolokalisierung verwendeten trusted Netzwerkendpunkt des gemanagten Netzes empfangen, so wird diese Nutzungsanfrage von dem betreffenden trusted Netzwerkendpunkt an eine ebenfalls zu dem gemanagten Netz gehörende zentrale Lokalisierungsinstanz übermittelt. Diese Instanz identifiziert den trusted Netzwerkendpunkt, über welchen ihr die Nutzungsanfrage zugeleitet wurde und ermittelt dessen Lokalisierung unabhängig von der Ausprägung dieses trusted Netzwerkendpunktes unter Rückgriff auf ein Ressourcenmanagement des Betreibers des gemanagten Netzes. Sofern sich hierbei ergibt, dass sich der die Nutzungsanfrage übermittelnde trusted Netzwerkendpunkt innerhalb des Nutzungsbereichs für den Dienst befindet, wird von der vorgenannten zentralen Lokalisierungsinstanz über diesen trusted Netzwerkendpunkt ein digitales Kennzeichen an das mobile Endgerät und an die von ihm verarbeitete, mit einer entsprechenden Programmierschnittstelle (API) ausgestattete Programmanwendung übermittelt, welches dem mobilen Endgerät beziehungsweise dessen Verwender die Nutzung des Dienstes ermöglicht. Die vorstehenden Ausführungen lassen erkennen, dass durch die zentrale Lokalisierungsinstanz genau genommen nicht das sich in dem Nutzungsbereich aufhaltende mobile Endgerät, sondern eigentlich der trusted Netzwerkendpunkt lokalisiert wird, über welchen die Anfrage zur Nutzung des Dienstes (Nutzungsanfrage) an die zentrale Lokalisierungsinstanz übermittelt wird. Soweit nachfolgend und in den Patentansprüchen die von dem mobilen Endgerät im Rahmen des Verfahrens beziehungsweise der Erfindung verarbeitete Programmanwendung (App) angesprochen wird, bezieht dies jeweils die zuvor bereits angesprochene Programmierschnittstelle - zu deren Funktion als Bestandteil der Programmanwendung (App) Ausführungen insbesondere im Zusammenhang mit der Darstellung des Ausführungsbeispiels erfolgen sollen - stets mit ein, auch wenn diese nicht ausdrücklich genannt wird. Bei dieser Programmierschnittstelle (API = Application Programming Interface) handelt es sich um eine lokale (innerhalb des mobilen Endgeräts durch Abarbeitung der Programmanwendung) realisierte Schnittstelle, so dass für diese die Kürzel API und LAPI (lokale API) im Rahmen dieser Anmeldung ebenso synonym gebraucht werden wie die Begriffe Programmierschnittstelle und Programminterface.

Bei dem vorgenannten digitalen Kennzeichen, welches die Nutzung des Dienstes ermöglicht, handelt es sich beispielsweise um eine Bitsequenz in der Art eines Tokens oder dergleichen. Das Kennzeichen beinhaltet Informationen zur Authentifizierung bei den Dienst bereitstellenden, an das Netzwerk angekoppelten Einrichtungen sowie vorzugsweise eine Signatur der das Kennzeichen ausstellenden Instanz, wobei es lediglich die Berechtigung zur Nutzung des Dienstes anzeigt, nicht aber im Sinne einer Identifizierung des diese Berechtigung nutzenden Endgeräts beziehungsweise seines Verwenders fungiert. In Bezug auf dieses Kennzeichen bedient sich das vorgeschlagene Verfahren bereits bekannter Verfahren (zum Beispiel OAUTH) und Formate (zum Beispiel JSON Web Token). Insoweit soll das digitale Kennzeichen beziehungsweise Token an dieser Stelle nicht Gegenstand weiterer Ausführungen und Erläuterungen sein.

Die Möglichkeit der Übertragung eines die Nutzung des Dienstes ermöglichenden Kennzeichens - wie beispielsweise insbesondere eines Tokens - und der Verwendung dieses Kennzeichens für die Dienstnutzung ist dabei daran gebunden, dass zuvor zwischen dem Betreiber des Verfahrens und somit der das Kennzeichen übertragenden zentralen Lokalisierungsinstanz sowie dem den Dienst offerierenden Dienstanbieter eine Vertrauensbeziehung hergestellt wurde, der Dienstanbieter also damit einverstanden ist, dass der Dienst innerhalb des Nutzungsbereichs im Umfang der für den zur Geolokalisierung verwendeten trusted Netzwerkendpunkt des gemanagten Netzes festgelegten Nutzungsrechte zur Nutzung mittels mobiler Endgeräte bereitgestellt wird. Hierbei wird nur ein durch den Betreiber des Verfahrens signiertes Kennzeichen (Token) von der oder den den Dienst erbringenden Einrichtungen, also von mindestens einer Diensteinrichtung des Dienstanbieters, akzeptiert. Auf der technischen Ebene kann im Zusammenhang mit der Herstellung eines solchen Vertrauensverhältnisses zum Beispiel ein Schlüsselaustausch zwischen den Einrichtungen des Verfahrensbetreibers und des Dienstanbieters erfolgen, für welchen je nach Ausprägung beispielsweise eine Public-Key-Infrastruktur genutzt werden kann. Allerdings ist dieser Vorgang der Schaffung eines entsprechenden Vertrauensverhältnisses losgelöst von dem hier beschriebenen technischen Verfahren zu sehen und basiert überwiegend auf organisatorischen beziehungsweise administrativen Abläufen, so dass dies hier ebenfalls nicht Gegenstand näherer Betrachtungen sein soll.

Soweit vorstehend und in den Patentansprüchen ausgeführt ist, dass die zentrale Lokalisierungsinstanz dazu ausgebildet ist, die Lokalisation des die Nutzungsanfrage übertragenden trusted Netzwerkendpunktes unabhängig von dessen Ausprägung zu ermitteln, nimmt dies darauf Bezug, dass die trusted Netzwerkendpunkte eines entsprechenden gemanagten Netzes unterschiedlichster technischer Art sein können. Bei den trusted Netzwerkendpunkten kann es sich zum Beispiel um Einrichtungen zur Terminierung eines DSL-Netzes an einem Festnetzanschluss, um eine ein Mobilfunknetz abschließende, dabei eine Pico- oder Femtozelle aufspannende Basisstation oder um einen durch den Betreiber des gemanagten Netzes unterhaltenen Hotspot handeln. Die vorgenannten Hotspots werden von den Betreibern gemanagter Netze, welche trusted Netzwerkendpunkte unterschiedlicher Art aufweisen, beispielsweise unabhängig beziehungsweise gesondert gegenüber trusted Netzwerkendpunkten eines DSL-Netzes gemanagt und sind insoweit von diesen zu unterscheiden.

Unabhängig von ihrer jeweiligen Art sind jedoch die trusted Netzwerkendpunkte des von einem Betreiber unterhaltenen gemanagten Netzes jeweils von Einrichtungen beziehungsweise in Datenbanken des Ressourcenmanagements des Netzbetreibers erfasst. Über das Ressourcenmanagement sind dabei auch jederzeit Lokalisierungsinformationen verfügbar, welche den Standort des jeweiligen trusted Netzwerkendpunktes geografisch eindeutig bezeichnen. Das Verfahren ermöglicht es demnach, den Standort des zur Contentnutzung verwendeten mobilen Endgeräts, insbesondere dessen Anwesenheit in dem Nutzungsbereich, eindeutig und unabhängig von dem durch das mobile Endgerät selbst zur Verfügung gestellten Lokalisierungstechniken festzustellen. Hierbei wird das Interesse des einen Dienst zur Nutzung bereitstellenden Dienstanbieters an einer hochgenauen Lokalisierung eines zur Dienstnutzung verwendeten mobilen Endgeräts sowie an einer Beschränkung der Verfügbarkeit des Contents innerhalb eines dafür vorgesehenen lokal bestimmten Nutzungsbereiches in vorteilhafter Weise mit den Interessen der Nutzer an einer Anonymität ihrer Daten in Übereinstimmung gebracht, indem der Nutzer regelmäßig nicht selbst identifiziert wird.

Bei der zentralen Lokalisierungsinstanz handelt es sich um einen hard- und softwarebasierten Bestandteil des ansonsten noch zu erläuternden Systems. Mittels einer entsprechenden von Netzwerkeinrichtungen des Betreibers des gemanagten Netzes verarbeiteten Software greift diese Instanz dabei unter Nutzung eines Ressourcenmanagements für dieses Netz auf vorzugsweise in einer oder mehreren Datenbanken oder dergleichen gehaltene Informationen zur Lokalisation beziehungsweise zur geographischen Anordnung von trusted Netzwerkendpunkte dieses gemanagten Netzes ausbildenden Netzwerkeinrichtungen (wie beispielsweise von einem DSL-Anschluss oder einer Basisstation, welche eine Mobilfunkzelle aufspannt) zu, ohne dabei personenbezogene Daten zu erheben oder abzurufen. Bei den vorgenannten Einrichtungen der zentralen Lokalisierungsinstanz kann es sich um dedizierte Server oder um virtuelle beziehungsweise cloudbasierte Serverlösungen handeln.

Entsprechend den vorstehenden Erläuterungen ergibt sich demnach bei der Ausführung des erfindungsgemäßen Verfahrens nach dem Starten der die Nutzung des Dienstes ermöglichenden Programmanwendung folgender Ablauf:
a.) Durch ein Programminterface der von der Verarbeitungseinheit des mobilen Endgeräts verarbeiteten Programmanwendung wird im Wege eines Polling wiederholt eine anonyme Nutzungsanfrage zur Nutzung des Dienstes ausgesendet.
b.) Bei Anwesenheit des mobilen Endgeräts in dem Nutzungsbereich wird die anonyme Nutzungsanfrage durch einen der zur Geolokalisierung verwendeten, in dem Nutzungsbereich angeordneten trusted Netzwerkendpunkte empfangen.
c.) Die anonyme Nutzungsanfrage des mobilen Endgeräts wird durch den sie empfangenden trusted Netzwerkendpunkt an eine zu dem gemanagten Netz gehörende zentrale Lokalisierungsinstanz weitergeleitet.
d.) Durch die zentrale Lokalisierungsinstanz wird die Lokalisation des die anonyme Nutzungsanfrage weiterleitenden trusted Netzwerkendpunktes unter Rückgriff auf ein Ressourcenmanagement des Betreibers des gemangten Netzes ermittelt.
e.) Sofern sich die gemäß d.) ermittelte Lokalisation innerhalb des Nutzungsbereichs für den Dienst befindet, wird durch die zentrale Lokalisierungsinstanz über den betreffenden Netzwerkendpunkt ein digitales Kennzeichen an das mobile Endgerät übermittelt. Dieses digitale Kennzeichen ermöglicht die anonyme Nutzung des Dienstes im Umfang der Nutzungsrechte, die für den zur Geolokalisierung verwendeten trusted Netzwerkendpunkt festgelegt sind und solange eine Verbindung zwischen dem mobilen Endgerät und dem trusted Netzwerkendpunkt besteht.

Nur vorsorglich und gewissermaßen ergänzend sei an dieser Stelle noch ausgeführt, dass im Rahmen der in diesem Dokument erfolgenden Erläuterungen zur Erfindung zwischen der Lokalisierung von anonyme Nutzungsanfragen übermittelnden Netzwerkendpunkten, nämlich dem Vorgang der Bestimmung ihres Standortes, und der Lokalisation, als dem unabhängig von diesem Vorgang existierenden Standort des jeweiligen Netzwerkendpunktes, unterschieden wird.

Das erfindungsgemäße Verfahren und das noch zu beschreibende System zu dessen Ausführung beziehen sich vorzugsweise auf die Bereitstellung eines Dienstes in einem IP-basierten Netzwerk. Innerhalb eines solchen Netzwerks wird dabei der entsprechende Dienst durch eine oder mehrere an das Netzwerk gekoppelte Einrichtungen beziehungsweise Server bereitgestellt.

Im Falle dessen, dass der Dienst in einer ortgebundenen Bereitstellung von Content besteht, handelt es sich hierbei beispielsweise um eine so genannte Content Delivery Platform, um ein Content Delivery Network (CDN), ein Content Management System oder dergleichen. Was die Frage der letztendlichen und tatsächlichen Bereitstellung des Contents, also dessen Übermittlung an ein diesen Content nutzendes mobiles Endgerät anbelangt, so kommen hierfür grundsätzlich unterschiedliche Möglichkeiten in Betracht. So ist es beispielsweise denkbar, dass der Content mittels einer ebenfalls in dem Nutzungsbereich angeordneten, zum gemanagten Netz gehörenden Netzabschlusseinrichtung auf das mobile Endgerät übertragen wird, welche nicht zwingend auch Bestandteil des zur Geolokalisierung dieses mobilen Endgeräts verwendeten Netzwerkendpunktes oder Bestandteil dieses Netzwerkendpunktes sein muss. Denkbar wäre es insoweit, dass die betreffende Einrichtung an einem anderen Endpunkt des gemanagten Netzes betrieben wird, dessen Ausprägung (Netzabschluss eines DSL-Netzes, Endpunkt eines Mobilfunknetzes oder Hotspot) gleicher Art ist wie die des für die Geolokalisierung verwendete Netzwerkendpunktes, wobei dieser Endpunkt aber möglicherweise - zum Beispiel aufgrund eines entsprechenden Eintrags im Ressourcenmanagement - nicht für die Geolokalisierung verwendet wird. Vorzugsweise ist die erfindungsgemäße Lösung jedoch so gestaltet, dass die Übertragung des ortgebunden bereitgestellten Contents an das sich in dem Nutzungsbereich aufhaltende mobile Endgerät mittels entsprechender Einrichtungen des auch für die Geolokalisierung verwendeten Netzwerkendpunktes erfolgt.

In Weiterbildung des Verfahrens beziehungsweise auch des erfindungsgemäßen Systems im Hinblick auf die Bereitstellung von Content als ortsgebundener Dienst kann es im letztgenannten Fall auch möglich sein, dass ein zur Geolokalisierung verwendete Netzwerkendpunkt mit Mitteln und/oder Einrichtungen ausgestattet ist, welche ein Caching des zur Bereitstellung in dem Nutzungsbereich vorgesehenen Contents ermöglichen (zum Beispiel Cachespeicher mit zugehörigem Speichercontroller). Dies kann insbesondere dann vorteilhaft sein, wenn die zur Anbindung der Einrichtungen des betreffenden Netzwerkendpunktes an das gemanagte Netz zur Verfügung stehende Bandbreite nicht sehr hoch ist oder aber innerhalb des Nutzungsbereichs, in dem sich der Netzwerkendpunkt befindet, eine sehr hochfrequente Nutzung des dort bereitgestellten Contents zu verzeichnen ist. Hierbei ist es möglich, den Content im Zusammenhang mit seiner erstmaligen Bereitstellung oder im Falle seiner Aktualisierung außerhalb der üblichen Nutzungszeiten an die das Caching ermöglichenden Einrichtungen beziehungsweise Speichermittel des betreffenden trusted Netzwerkendpunktes zu übertragen, so dass der Content später lokal mit sehr großer Bandbreite zur Übertragung an ihn zur Nutzung anfordernde mobile Endgeräte zur Verfügung steht.

Das erfindungsgemäße Verfahren kann noch dadurch weitergebildet sein, dass zur Verfeinerung der Lokalisierung, also zur Erhöhung der Genauigkeit, mit welcher die Anwesenheit eines mit der erfindungsgemäß vorgesehenen Programmanwendung ausgestatteten mobilen Endgeräts innerhalb des Nutzungsbereichs festgestellt wird, ausnahmsweise zusätzlich Lokalisierungstechniken mit herangezogen werden, welche von diesem Endgerät selbst zur Verfügung gestellt werden. Hierbei ist jedoch zu betonen, dass die eigentliche Lokalisierung unter Nutzung des erfindungsgemäßen Verfahrens mit Hilfe mindestens eines in dem Nutzungsbereich angeordneten, zu dem gemanagten Netz gehörenden Netzwerkendpunktes erfolgt und die Lokalisierungstechniken des mobilen Endgeräts nur ergänzend mit herangezogen werden. Auch hierbei muss dann aber gewährleistet bleiben, dass der Nutzer des Endgeräts anonym bleibt. Dies kann beispielsweise dadurch geschehen, dass diese Lokalisierungstechniken nur im Zusammenwirken einer erfindungsgemäß in dem mobilen Endgerät als Teil der von diesem verarbeiteten App vorgesehenen lokalen Programmierschnittstelle (LAPI) und des zur Geolokalisierung verwendeten trusted Netzwerkendpunktes genutzt werden. Letzterer kann in diesem Fall und/oder im Zusammenhang mit der zuvor erwähnten Möglichkeit eines Caching von Content ebenfalls mit einer entsprechenden, von der Schnittstelle der von dem Endgerät verarbeiteten App zu unterscheidenden lokalen API (LAPI) ausgestattet sein. Die Einbeziehung zusätzlicher Lokalisierungstechniken kann zum Beispiel dann vorteilhaft sein, wenn sich der Nutzungsbereich, beispielsweise ein Ladengeschäft, innerhalb eines Gebäudes mit eng benachbarten anderen Geschäften oder Büros befindet und eine beispielsweise durch den Netzwerkendpunkt aufgespannte WLAN-Zelle daher auch Teile der angrenzenden Räume mit abdeckt.

Eine besonders vorteilhafte Möglichkeit der Verfeinerung der Lokalisierung besteht beispielsweise in dem Einsatz sogenannter Beacons in einem Nutzungsbereich, wie beispielsweise einem Ladengeschäft. In einem solchen Falle sind dann jedoch die entsprechenden Beacons bei dem zur Lokalisierung verwendeten trusted Netzwerkendpunkt registriert und über diesen ebenfalls an das zur Bereitstellung des Dienstes dienende Netzwerk angekoppelt.

Ein die Aufgabe lösendes, zur Durchführung des zuvor erläuterten Verfahrens ausgebildetes beziehungsweise geeignetes System umfasst mindestens ein zu dem Netzwerk, in welchem ein Dienst ortsgebunden bereitgestellt wird, gehörendes gemanagtes Netz und mindestens ein über trusted Netzwerkendpunkte dieses von einem Betreiber gemanagten Netzes nichtleitungsgebunden (vorzugsweise über Funk) an das Netzwerk anzukoppelndes Endgerät, welches über eine Verarbeitungseinheit verfügt und mittels welchem der bereitgestellte Dienst innerhalb eines lokal bestimmten Nutzungsbereichs nutzbar ist. Mit dem vorgenannten, die aufgeführten Teile des Systems umfassenden Netzwerk ist mindestens eine den Dienst bereitstellende netzwerkfähige Diensteinrichtung, wie beispielsweise eine einen Content haltende Einrichtung, gekoppelt.

Das mobile Endgerät ist mit einer zur Nutzung des Dienstes zu startenden, von seiner Verarbeitungseinheit verarbeitbaren Programmanwendung ausgestattet. Bestandteil dieser Programmanwendung ist ein lokales Programminterface (LAPI = Programmierschnittstelle), welches nach dem Start der Programmanwendung im Wege des Polling wiederholt anonyme Nutzungsanfragen aussendet. Diese Nutzungsanfragen beziehen sich auf die Nutzung eines Dienstes, welcher durch denjenigen Dienstanbieter bereitgestellt wird, der auch die betreffende Programmanwendung (App) verbreitet beziehungsweise für den diese App verbreitet wird. Erfindungsgemäß ist weiterhin Bestandteil des gemanagten Netzes eine durch Netzeinrichtungen dieses Netzes und eine von diesen Netzeinrichtungen verarbeitete Software gebildete zentrale Lokalisierungsinstanz. Ferner ist Bestandteil des Systems mindestens ein trusted Netzwerkendpunkt des gemanagten Netzes, der in dem Nutzungsbereich angeordnet ist und empfangene anonyme Nutzungsanfragen an die zentrale Lokalisierungsinstanz sowie ein von dieser gegebenenfalls im Gegenzug ausgesendetes, die Nutzung des Dienstes ermöglichendes digitales Kennzeichen an das den Dienst anfordernde mobile Endgerät weiterleitet.

Die zentrale Lokalisierungsinstanz ist wiederum, realisiert mittels Hard- und Software, dazu ausgebildet, den lokalen Standort des die Nutzungsanfrage weiterleitenden trusted Netzwerkendpunktes unter Rückgriff auf das Ressourcenmanagement des Betreibers des gemanagten Netzes beziehungsweise damit auch des Betreibers des betreffenden trusted Netzwerkendpunktes unabhängig von der Ausprägung dieses trusted Netzwerkendpunktes zu ermitteln. Sofern hierbei festgestellt wird, dass es sich bei diesem Standort um einen Standort innerhalb eines Nutzungsbereichs für die ortsgebundene Bereitstellung des angefragten Dienstes handelt, sendet die zentrale Lokalisierungsinstanz an den die Nutzungsanfrage übermittelnden Netzwerkendpunkt ein digitales Kennzeichen (zum Beispiel Token) aus, welches der betreffende Netzwerkendpunkt, wiederum - wie bereits ausgeführt - an das die mobile Nutzungsanfrage stellende mobile Endgerät weiterleitet. Mit Hilfe dieses Kennzeichens ist dann dem mobilen Endgerät, das heißt dessen Nutzer, innerhalb des Nutzungsbereichs die Nutzung des angefragten Dienstes, beispielsweise die Nutzung eines bereitgestellten Contents, möglich.

Korrespondierend mit einer bereits beschriebenen Weiterbildung des Verfahrens kann der zur Geolokalisierung genutzte trusted Netzwerkendpunkt des gemanagten Netzes ausgestattet sein mit Mitteln für das Caching von Content, der in dem durch den betreffenden Netzwerkendpunkt bestimmten Nutzungsbereich bereitgestellt werden soll. Hierbei handelt es sich um entsprechende Speichermittel (Cachespeicher) zum Speichern des betreffenden Contents und um eine von mindestens einer Verarbeitungseinheit einer entsprechenden Einrichtung verarbeitbare Software für die Steuerung und das Management des Caching. Bezüglich der Speichermittel kommen im Grunde alle gängigen Speichertechniken, wie insbesondere Halbleiterspeicher, SSD's und Festplatten in Betracht. Die vorgenannten Speicher und die Verarbeitungseinheit beziehungsweise eine solche Verarbeitungseinheit aufweisende Einrichtungen können als integraler Bestandteil eines zur Geolokalisierung verwendeten Netzwerkendpunktes ausgebildet oder diesem unmittelbar zugeordnet sein, wobei jedoch auch im letztgenannten Fall weder die Integrität der zum Netzwerkendpunkt im Ressourcenmanagement des gemanagten Netzes gehaltenen Lokalisierungsinformation berührt wird, noch diese Information manipulierbar ist.

Weiterhin kann das zuvor dargestellte System noch um Mittel zur Verfeinerung beziehungsweise zur Erhöhung der Genauigkeit des Lokalisierungsergebnisses umfassen. So können beispielsweise in dem Nutzungsbereich Beacons, nämlich Funksignale nach dem Bluetooth- oder dem Bluetooth-Low-Energy-Standard aussendende Sendeeinrichtungen, angeordnet sein, welche einem sich in dem Nutzungsbereich befindenden mobilen Endgerät seine eigene Lokalisierung ermöglichen. Die von dem mobilen Endgerät ausgeführte App ist in diesem Falle derart beschaffen, dass die dabei gewonnenen Lokalisierungsinformationen zur Verfeinerung des Lokalisierungsergebnisses durch das mobile Endgerät an den auch zur Geolokalisation im Rahmen der erfindungsgemäßen Lösung genutzten Netzwerkendpunkt übertragen werden.

Nachfolgend soll ein Ausführungsbeispiel der Erfindung anhand von Zeichnungen erläutert werden. Die Zeichnungen zeigen im Einzelnen:
- Fig.1:: ein Strukturschema für eine mögliche Ausbildungsform des erfindungsgemäßen Systems,
- Fig. 2:: ein Sequenzdiagramm zur Darstellung eines möglichen Ablaufs des erfindungsgemäßen Verfahrens.

Anhand der Zeichnungen soll eine mögliche Ausbildungsform der erfindungsgemäßen Lösung im Zusammenhang mit der Bereitstellung von Content in einem Ladengeschäft einer Buchhandlungskette erläutert werden. Die Erfindung ermöglicht es dem Buchhandelsunternehmen hierbei, Content, nämlich den Inhalt von in seinen Ladengeschäften verkauften Büchern, in elektronischer Form zur Nutzung mit einem mobilen Endgerät 2, wie insbesondere einem Smartphone, bereitzustellen. Die Bereitstellung der jeweiligen Inhalte, also des Contents, erfolgt dabei jedoch insoweit ortsgebunden, als dessen Nutzung vor einem eventuellen käuflichen Erwerb auf die Räume eines jeweiligen Ladengeschäfts des Buchhandelsunternehmens beschränkt ist.

Ebenso wie der potentielle Käufer eines auf Papier gedruckten Buches in einer Buchhandlung beziehungsweise in einem Ladengeschäft eines Buchhändlers in dem betreffenden Buch blättern kann, um darüber zu entscheiden, ob er dieses käuflich erwerben möchte, ist es mit Hilfe der erfindungsgemäßen Lösung demnach möglich, dem Käufer gewissermaßen ein virtuelles Blättern in einem in Form digitalen Contents bereitgestellten Buches zu ermöglichen. Sobald jedoch der Käufer eine mit Teilen des erfindungsgemäßen Systems ausgestattete Buchhandlung verlässt, ist ihm der Zugriff auf diesen Content mittels seines mobilen Endgeräts 2 nicht mehr möglich. Um den elektronischen Content auch künftig und außerhalb der Buchhandlung beziehungsweise des Buchladens nutzen zu können, muss der Käufer den betreffenden Content zunächst käuflich erwerben. Mit Hilfe der erfindungsgemäßen Lösung kann also ein solcher Content einem potentiellen Käufer unter Wahrung der Eigentumsrechte des Buchhändlers sowie der Urheberrechte des Buchverfassers ortsgebunden, innerhalb eines festgelegten Nutzungsbereichs, nämlich innerhalb der Räumlichkeiten eines Buchladens, zur Nutzung, das heißt zur Einsichtnahme, bereitgestellt werden. Dem potentiellen Käufer ist dabei die Einsichtnahme möglich, ohne dass dieser seine Identität Preis geben muss. Er bleibt vielmehr jedenfalls bis zu einem eventuellen Kauf anonym, so dass auch seine Persönlichkeitsrechte gewahrt werden.

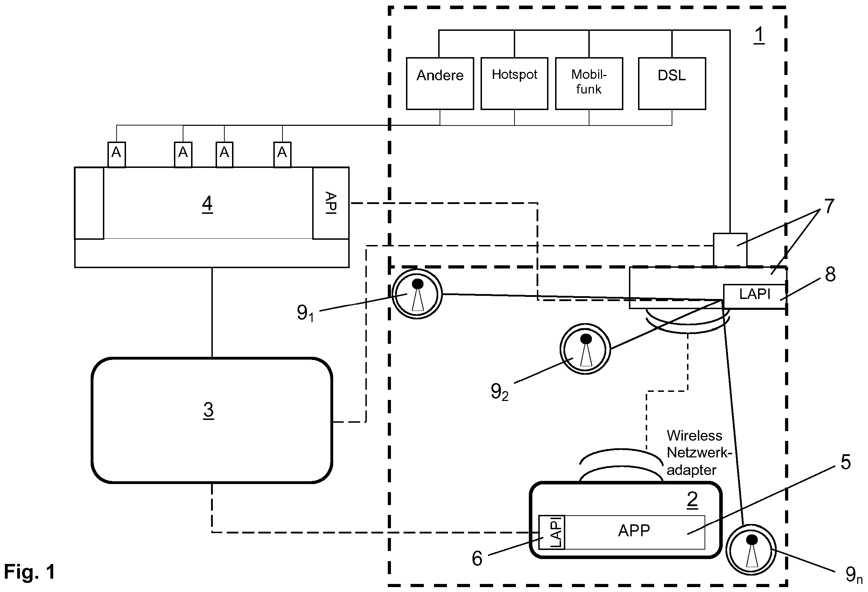

Die Fig. 1 zeigt beispielhaft ein Strukturschema für eine mögliche Ausbildungsform eines zur Durchführung des erfindungsgemäßen Verfahrens ausgebildeten Systems. In dem Beispiel bezieht sich der ortsgebunden bereitgestellte beziehungsweise nutzbare Dienst, wie bereits ausgeführt, auf die Bereitstellung von Content. Wesentliche Bestandteile des beispielhaft gezeigten Systems sind ein mobiles Endgerät 2 zur Nutzung eines ortsgebunden bereitgestellten elektronischen Contents, ein in einem festgelegten Nutzungsbereich - gemäß dem Beispiel innerhalb der Räume einer Buchhandlung - angeordneter, durch entsprechende elektronische Einrichtungen ausgebildeter Netzwerkendpunkt 7 eines gemanagten Netzes 1 sowie eine soft- und hardwarebasierte zentrale Lokalisierungsinstanz 4, wobei die vorgenannten Komponenten des Systems gemeinsam in einem Netzwerk angeordnet sind. Gekoppelt mit diesem Netzwerk beziehungsweise mit dem System und damit zu ihm gehörend sind computerbasierte Einrichtungen 3 mit einer Content Delivery Platform, auf welchem der bereitzustellende Content in entsprechenden Speichermitteln gehalten wird.

Das mobile Endgerät 2 ist mit einer durch den Bereitsteller des Contents beziehungsweise für diesen zur Verfügung gestellten Programmanwendung 5, das heißt einer App, ausgestattet. Zur Nutzung des Verfahrens, das heißt zur Nutzung von ortsgebunden, innerhalb von Verkaufsgeschäften beziehungsweise Buchläden des die App zur Verfügung stellenden Buchhandelsunternehmens bereitgestellten Contents, muss die betreffende App 5 durch den Nutzer auf dem mobilen Endgerät 2 (Smartphone) gestartet werden. Nach ihrem Start sendet das die App 5 mittels seiner Verarbeitungseinheit verarbeitende mobile Endgerät 2 in der Art eines Polling wiederholt anonyme Nutzungsanfragen aus. Der das mobile Endgerät 2 mit sich führende Nutzer signalisiert hierdurch zunächst lediglich sein potentielles Interesse an der Nutzung von durch das Buchhandelsunternehmen bereitgestellten Content, ohne dass er hierbei Angaben zu seiner Person preisgibt. Betritt er nun mit dem von ihm mitgeführten mobilen Endgerät 2 ein Ladengeschäft des Buchhandelsunternehmens, also eine entsprechende Buchhandlung, so wird die wiederholt von dem mobilen Endgerät 2 ausgesendete anonyme Nutzungsanfrage von den elektronischen Einrichtungen eines in den Räumlichkeiten der Buchhandlung angeordneten Netzwerkendpunktes 7 eines gemanagten Netzes 1 empfangen. Bei diesem Netzwerkendpunkt 7 beziehungsweise bei der diesen ausbildenden Einrichtung, kann es sich beispielsweise um einen DSL-Festnetzanschluss handeln, an welchem ein Router betrieben wird, der eine den Nutzungsbereich abdeckende WLAN-Zelle aufspannt (WIFI-Router).

Die den im Ladengeschäft angeordneten Netzwerkendpunkt 7 des gemanagten Netzes 1 ausbildenden Einrichtungen leiten die von ihnen empfangene anonyme Nutzungsanfrage über das Netzwerk an Einrichtungen einer speziellen Lokalisierungsinstanz 4 weiter. Diese zentrale Lokalisierungsinstanz 4 beziehungsweise deren elektronische Einrichtungen werden als Bestandteil des gemanagten Netzes 1 durch dessen Betreiber betrieben. Unter Rückgriff auf das Ressourcenmanagement des gemanagten Netzes 1, also des von dem Telekommunikationsunternehmen unterhaltenen Netzes 1, stellt die zentrale Lokalisierungsinstanz 4 den Standort, das heißt die Lokalisation des die anonyme Nutzungsanfrage weiterleitenden Netzwerkendpunktes 7 und damit indirekt den Standort des mobilen Endgeräts 2, fest.

Bestandteile des Ressourcenmanagements, auf welche die zentrale Lokalisierungsinstanz zugreift, sind dabei beispielsweise entsprechende Server des Betreibers des gemanagten Netzes 1, auf welchen Datenbanken gehalten werden, in denen die Endpunkte beziehungsweise Netzwerkendpunkte 7 des gemanagten Netzes 1 mit ihrer jeweiligen geografischen Lokalisation verzeichnet sind. Die Unterscheidung der einzelnen Netzwerkendpunkte 7 erfolgt beispielsweise mittels einer diese eindeutig voneinander unterscheidenden ID, unter welcher beispielsweise geografische Breiten- und Längengrade entsprechend der geografischen Lokalisation des jeweiligen Netzwerkendpunktes 7 und/oder Angaben zur Anordnung des Netzwerkendpunktes 7 unter organisatorischen Gesichtspunkten (beispielsweise angeordnet im Ladengeschäft x des Buchhandelsunternehmens y) vermerkt sind.

Die zentrale Lokalisierungsinstanz 4 kann dabei unabhängig von der Beschaffenheit des die anonyme Nutzungsanfrage weiterleitenden Netzwerkendpunktes 7 (DSL-Festnetzanschluss, Hotspot oder Nano- beziehungsweise Femtozelle) feststellen, ob dieser innerhalb eines Nutzungsbereichs angeordnet ist, in welchem durch einen entsprechenden Dienstanbieter beziehungsweise Contentanbieter (hier das Buchhandelsunternehmen) Content zur ortsgebundenen Nutzung bereitgestellt wird. Befindet sich der die anonyme Nutzungsanfrage weiterleitende Netzwerkendpunkt 7 in einem solchen Nutzungsbereich, so wird durch die zentrale Lokalisierungsinstanz 4 an diesen Netzwerkendpunkt 7 beziehungsweise, über diesen, an das sich folglich in diesem Moment ebenfalls in dem Nutzungsbereich befindende mobile Endgerät 2, welches die anonyme Nutzungsanfrage ausgesendet hatte, ein digitales Kennzeichen, wie ein Token mit einer Signatur des Ausstellers und mit einem Link zu der Content Delivery Platform (Einrichtung 3) übertragen. Unter Verwendung dieses Tokens erhält das mobile Endgerät 2 und somit sein weiterhin anonym bleibender Verwender, Zugriff auf den durch die Einrichtung 3, hier die Content Delivery Platform gehaltenen Content.

Die Nutzungsrechte für den Content sind dabei unmittelbar an den, im Beispiel (als Bestandteil des an dem Festnetzanschluss betriebenen WLAN-Routers) ebenfalls mit einer speziellen, von der LAPI 6 des Endgeräts 2 zu unterscheidenden lokalen Programmierschnittstelle (LAPI 8) ausgestatteten Netzwerkendpunkt 7 im Nutzungsbereich gebunden. Ihr Umfang wird durch die Policies des Contentanbieters in Zuordnung zu einem jeweiligen in einem Nutzungsbereich angeordneten Netzwerkendpunkt 7 bestimmt. Mittels des mobilen Endgeräts 2 können diese Nutzungsrechte nur solange wahrgenommen werden, wie sich dieses in dem Nutzungsbereich befindet und zwischen ihm und dem Netzwerkendpunkt 7 eine Verbindung besteht. Letzteres wird nach der Übermittlung des den Zugriff auf den Content ermöglichenden Tokens durch die mit der lokalen Programmierschnittstelle (LAPI 6) ausgestatte, von dem mobilen Endgerät verarbeitete App 5 im Wege der Kommunikation mit dem Netzwerkendpunkt 7 permanent überprüft. Besteht die Verbindung nicht mehr wird das Token durch die LAPI 6 der auf dem Endgerät ausgeführten APP 5 invalidiert, also ungültig gemacht.

Letzteres gilt auch im Falle der Beendigung der App. Eine Nutzung des Contents entsprechend den an den Netzwerkendpunkt gebundenen Nutzungsrechten ist dann mittels des betreffenden Endgeräts ohne den erneuten Empfang eines dazu berechtigenden digitalen Kennzeichens beziehungsweise Tokens nicht mehr möglich. Hingegen kann während der Dauer des Bestehens der Verbindung der Content mittels der APP 5 im Umfang dieser Nutzungsrechte anonym genutzt werden.

In Weiterbildung der Erfindung kann es darüber hinaus vorgesehen sein, dass der Nutzer, sofern er dies wünscht, weitergehende als die an den Netzwerkendpunkt 7 gebundenen Rechte erhält, sofern er, beispielsweise zum Zwecke des Kaufs seine Anonymität aufgibt.

Bei der Beschreibung des in der Fig. 1 beispielhaft gezeigten Systems war davon ausgegangen worden, dass es sich bei dem Netzwerkendpunkt 7 des gemanagten Netzes um einen Festnetzanschluss handelt, an dem ein WIFI-Router betrieben wird, der eine WLAN-Zelle, als sogenannte Cell of Origin, aufspannt. Sofern sich nun in enger Nachbarschaft zu den Räumlichkeiten der Buchhandlung Räume anderer Firmen oder von Privatpersonen befinden, kann es aber möglich sein, dass die Cell of Origin teilweise in entsprechende angrenzende Räumlichkeiten mit hineinragt. Um die betreffenden Bereiche angrenzender Räumlichkeiten aus dem für die ortsgebundene Nutzung festgelegten Nutzungsbereich auszuschließen, kann eine Verfeinerung der Lokalisierung des mobilen Endgeräts 2 beziehungsweise von zur Nutzung des Contents innerhalb des Nutzungsbereichs mit einer entsprechenden App 5 ausgestatteten mobilen Endgeräten 2 unter Einbeziehung weiterer Lokalisierungstechniken erfolgen. An dieser Stelle sei jedoch nochmals betont, dass die eigentliche grundsätzliche Lokalisierung entsprechend dem erfindungsgemäßen Verfahren mit Hilfe des in dem Ladengeschäft beziehungsweise in der Buchhandlung angeordneten Netzwerkendpunktes 7 (hier Festnetzanschluss) erfolgt.

Die ergänzend herangezogenen Lokalisierungstechniken dienen, wie gesagt, lediglich der weiteren Verfeinerung des Lokalisierungsergebnisses. Gemäß dem gezeigten Beispiel sind zu diesem Zweck in der betreffenden Buchhandlung zusätzlich sogenannte Beacons 9₁ - 9ₙ angeordnet, mit welchen sich in den Räumlichkeiten der Buchhandlung aufhaltende mobile Endgeräte über Bluetooth kommunizieren. Im Rahmen einer solchen Kommunikation ist es dabei einem jeweiligen mobilen Endgerät 2 im Wege der Kreuzpeilung möglich, seine eigene Position innerhalb der Räumlichkeiten der Buchhandlung zu bestimmen und entsprechende Angaben an den Netzwerkendpunkt 7 des gemanagten Netzes 1 zu übertragen, um das Lokalisierungsergebnis zu verfeinern. Ein etwaiges, durch die Einrichtungen des Netzwerkendpunktes 7 von der zentralen Lokalisierungsinstanz 4 empfangenes Token wird dann beispielsweise an ein mobiles Endgerät 2 auf dessen anonyme Nutzungsanfrage nur dann weitergeleitet, wenn im Wege der Verfeinerung der Lokalisierungsinformation Klarheit darüber besteht, dass sich das betreffende mobile Endgerät 2 innerhalb der Buchhandlung und nicht etwa im Bereich angrenzender Räumlichkeiten befindet. Die vorgenannten Beacons 9₁ - 9ₙ sind hierbei an die Netzwerkeinrichtungen, mittels welcher der zur Geolokalisierung im Zusammenwirken mit der zentralen Lokalisierungsinstanz ausgebildete Netzwerkendpunkt 7 realisiert ist, angebunden und bei diesem angemeldet.

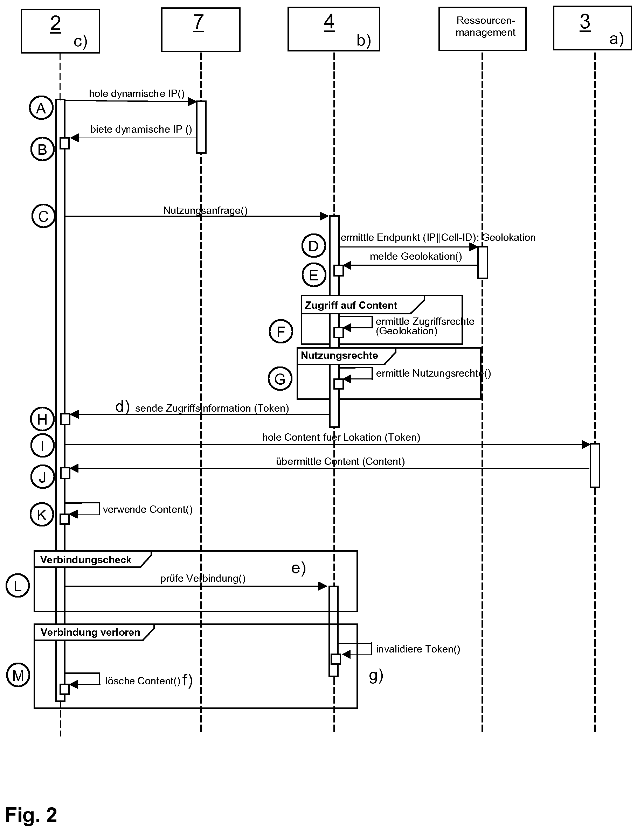

In der Fig. 2 sind die zuvor anhand der Fig. 1 geschilderten Abläufe nochmals in Form eines Sequenzdiagramms dargestellt. Demnach vollzieht sich folgender Ablauf:
A. Ein vom Betreiber des gemanagten Netzes 1 beziehungsweise vom Anbieter des Verfahrens bereitgestelltes lokales Application Programming Interface (Programmierschnittstelle LAPI 6) als Bestandteil einer auf dem mobilen Endgerät zur Nutzung des erfindungsgemäßen Verfahrens gestarteten App 5 fordert im Rahmen einer nach dem Prinzip des Polling wiederholt ausgesendeten Anfrage zur Nutzung eines Contents (Nutzungsanfrage) bei den Einrichtungen des innerhalb der Buchhandlung angeordneten Netzwerkendpunktes 7 des gemanagten Netzes 1 - das heißt hier eigentlich nicht bei dem DSL-Festnetzanschluss selbst, sondern bei dem am Festnetzanschluss betriebenen, eine WLAN-Zelle als Cell of Origin aufspannenden Router (WIFI-Router) - eine dynamische IP-Adresse zur nicht drahtgebundenen Ankopplung an das zum erfindungsgemäßen System gehörende Netzwerk an.
B. Der Netzwerkendpunkt 7, das heißt der betreffende WIFI-Router, übermittelt eine entsprechende dynamische IP an das mobile Endgerät 2 beziehungsweise dessen App 5 mit der LAPI 6.
C. Die Nutzungsanfrage des mobilen Endgeräts 2 und seiner LAPI 6 (als Bestandteil der App 5) wird der zentralen Lokalisierungsinstanz 4 zugeleitet.
D. Diese ermittelt unter Zugriff auf das Ressourcenmanagement des Betreibers des gemanagten Netzes 1, zu welchem der in der Buchhandlung angeordnete Netzwerkendpunkt 7 gehört, die Geolokation des Netzwerkendpunktes 7, über den das mobile Endgerät 2 die Verbindung aufgebaut hat.
E. Die Angaben zur Geolokalisation werden der zentralen Lokalisierungsinstanz 4 durch das Ressourcenmanagement (beispielsweise eine entsprechende Datenbank) zur Verfügung gestellt.
F. Die zentrale Lokalisierungsinstanz 4 überprüft unter Nutzung einer Mapping-Tabelle, ob die Lokalisierungsangaben einen Netzwerkendpunkt 7 bezeichnen, über welchen ein entsprechender Content ortsgebunden bereitgestellt, also Zugriff auf diesen gewährt wird.
G. Die Einrichtungen der zentralen Lokalisierungsinstanz 4 ermitteln die Nutzungsrechte, welche an den innerhalb des Nutzungsbereichs gelegenen Netzwerkendpunkt 7 gebunden sind.
H. Über den betreffenden Netzwerkendpunkt 7 wird ein die Nutzung des Contents innerhalb des Nutzungsbereichs ermöglichendes Token an das mobile Endgerät 2 übermittelt.
I. Das Token ermöglicht es dem Nutzer mittels des Endgeräts 2 im Rahmen der Ausführung der App auf den Content zugreifen und diesen im Umfang der dem Netzwerkendpunkt 7 zugeordneten Nutzungsrechte zu nutzen. Hierbei greift die LAPI 6 als Bestandteil der von dem mobilen Endgerät 2 verarbeiteten App 5 auf den durch eine Einrichtung 3, wie beispielsweise eine Content Delivery Platform, bereitgestellten Content zu.
J. Die vorgenannte Einrichtung 3 (Content Delivery Platform) überträgt den betreffenden, angeforderten Inhalt (hier über den zur Geolokalisierung verwendeten Netzwerkendpunkt 7) an das mobile Endgerät 2.
K. Hier wird der übertragene Content verwendet, das heißt mittels des mobilen Endgeräts 2 durch die dieses mitführende Person genutzt.
L. Während der Ausführung der App 5 und der dabei erfolgenden Nutzung des Contents überprüft die LAPI 6 des mobilen Endgeräts 2 durch Kommunikation mit den Einrichtungen des Netzwerkendpunktes 7 fortwährend, ob die Verbindung zu dem Netzwerkendpunkt 7 noch besteht.
M. Sofern die Verbindung nicht mehr besteht oder die App 5 beendet wird, wird das zuvor an das mobile Endgerät übermittelte Token (im Falle der Beendigung der App 5 im Zusammenhang mit dieser Beendung) invalidiert, das heißt ungültig gemacht. Das Token kann nun nicht mehr für einen Zugriff auf den durch die Einrichtung 3 (Content Delivery Platform) gehaltenen Content genutzt werden. Gleichzeitig wird eventuell innerhalb des mobilen Endgeräts 2 gepufferter Content auf dem Endgerät 2 gelöscht.

## Patentansprüche

1. Verfahren zur ortsgebundenen Bereitstellung eines Dienstes in einem Netzwerk für die Nutzung mittels eines mobilen, mit dem Netzwerk nichtleitungsgebunden gekoppelten Endgeräts (2), gemäß welchem der jeweilige, von mindestens einer ebenfalls mit dem Netzwerk gekoppelten Diensteinrichtung (3) erbrachte Dienst nur innerhalb eines lokal bestimmten Nutzungsbereiches bereitgestellt wird und mittels eines sich in dem Nutzungsbereich befindenden, mit einer Verarbeitungseinheit ausgestatteten mobilen Endgeräts (2) unter Verwendung einer auf diesem gestarteten, von der Verarbeitungseinheit verarbeiteten Programmanwendung (5) nutzbar ist, wobei die Anwesenheit des mobilen Endgerätes (2) in dem Nutzungsbereich durch Geolokalisierung des mobilen Endgerätes (2) festgestellt wird, welche mit Hilfe von trusted Netzwerkendpunkten (7) mindestens eines von dem Netzwerk umfassten, von einem Betreiber unterhaltenen gemanagten Netzes (1) erfolgt, deren jeweilige Lokalisation dem Betreiber des gemanagten Netzes (1) bekannt ist, **dadurch gekennzeichnet, dass** nach dem Starten der die Nutzung des Dienstes ermöglichenden Programmanwendung (5)
a.) durch ein Programm interface (6) der von der Verarbeitungseinheit des mobilen Endgeräts (2) verarbeiteten Programmanwendung im Wege des Polling wiederholt eine anonyme Nutzungsanfrage zur Nutzung des Dienstes ausgesendet wird,
b.) bei Anwesenheit des mobilen Endgeräts (2) in dem Nutzungsbereich die anonyme Nutzungsanfrage durch einen der zur Geolokalisierung verwendeten, in dem Nutzungsbereich angeordneten trusted Netzwerkendpunkte (7) empfangen wird,
c.) die anonyme Nutzungsanfrage des mobilen Endgeräts (2) durch den sie empfangenden trusted Netzwerkendpunkt (7) an eine zu dem gemanagten Netz (1) gehörende zentrale Lokalisierungsinstanz (4) weitergeleitet wird,
d.) durch die zentrale Lokalisierungsinstanz (4) die Lokalisation des die anonyme Nutzungsanfrage weiterleitenden trusted Netzwerkendpunktes (7) unter Rückgriff auf ein Ressourcenmanagement des Betreibers des gemangten Netzes (1) ermittelt und
e.) sofern sich die gemäß d.) ermittelte Lokalisation innerhalb des Nutzungsbereichs für den Dienst befindet, durch die zentrale Lokalisierungsinstanz (4) über diesen trusted Netzwerkendpunkt (7) ein digitales Kennzeichen an das mobile Endgerät (2) übermittelt wird, welches die anonyme Nutzung des Dienstes im Umfang für den zur Geolokalisierung verwendeten trusted Netzwerkendpunkt (7) festgelegter Nutzungsrechte ermöglicht, solange eine Verbindung zwischen dem mobilen Endgerät (2) und dem trusted Netzwerkendpunkt (7) besteht.

2. Verfahren nach Anspruch 1, **dadurch gekennzeichnet, dass** die Bereitstellung des Dienstes über den auch die anonyme Nutzungsanfrage zum Zweck der Geolokalisierung an die zentrale Lokalisierungsinstanz (4) weiterleitenden trusted Netzwerkendpunkt (7) des gemanagten Netzes (1) erfolgt.

3. Verfahren nach Anspruch 1 oder 2, **dadurch gekennzeichnet, dass** sich der ortgebunden nutzbare Dienst auf die ortgebundene Bereitstellung eines Contents bezieht.

4. Verfahren nach Anspruch 3, **dadurch gekennzeichnet, dass** der Content zur Nutzung in einem Cachespeicher von Einrichtungen gehalten wird, mit welchen der zur Geolokalisierung verwendete trusted Netzwerkendpunkt (7) ausgestattet ist, über den der ortgebunden nutzbare Dienst bereitgestellt, das heißt der Content ausgeliefert wird, wobei der Content an diese Einrichtungen durch die ihn ursprünglich haltende Diensteinrichtung (3) vor oder im Zusammenhang mit seiner erstmaligen Anforderung übertragen wird.

5. Verfahren nach Anspruch 1 oder 2, **dadurch gekennzeichnet, dass** zur Erhöhung der Genauigkeit der mittels eines trusted Netzwerkendpunktes (7) eines gemanagten Netzes (1) und der zentralen Lokalisierungsinstanz (4) erfolgenden Geolokalisierung zusätzlich andere Lokalisierungstechniken einbezogen werden.

6. Verfahren nach Anspruch 5, **dadurch gekennzeichnet, dass** zur Erhöhung der Genauigkeit der Geolokalisierung innerhalb eines für die ortsgebundene Bereitstellung des Dienstes vorgesehenen Nutzungsbereichs Beacons (9₁ - 9ₙ), nämlich Funksignale nach dem Bluetooth- oder dem Bluetooth-Low-Energy-Standard aussendende Sendeeinrichtungen, angeordnet werden, welche bei dem zur Geolokalisierung verwendeten trusted Netzwerkendpunkt (7) registriert sind und dass mittels eines innerhalb des Nutzungsbereichs anonyme Nutzungsanfragen aussendenden mobilen Endgeräts (2) aus den von den Beacons (9₁ - 9ₙ) empfangenen Funksignalen im Wege einer Kreuzpeilung oder einer Triangulation eine zusätzliche Lokalisierungsinformation gewonnen und über den zur Geolokalisation verwendeten trusted Netzwerkendpunkt (7) an die zentrale Lokalisierungsinstanz (4) zur Verfeinerung ihres Lokalisierungsergebnisses übermittelt wird.

7. System zur ortsgebundenen Bereitstellung eines Dienstes in einem Netzwerk, mit mindestens einem über Einrichtungen für ein Ressourcenmanagement verfügenden, zu dem Netzwerk gehörenden, gemanagten Netz (1), mit mindestens einem über trusted Netzwerkendpunkte (7) des von einem Betreiber unterhaltenen gemanagten Netzes (1) nichtleitungsgebunden an das Netzwerk anzukoppelnden, eine Verarbeitungseinheit aufweisenden mobilen Endgerät (2), mittels welchem der bereitgestellte Dienst innerhalb eines lokal bestimmten Nutzungsbereichs nutzbar ist und mit mindestens einer netzwerkfähigen, zur Bereitstellung des Dienstes mit dem Netzwerk gekoppelten Diensteinrichtung (3), wobei das mindestens eine mobile Endgerät (2) mit einer zur Nutzung des Dienstes zu startenden, von seiner Verarbeitungseinheit verarbeitbaren Programmanwendung (5) ausgestattet ist, **dadurch gekennzeichnet, dass**
a.) die Programmanwendung (5), mit welcher das mindestens eine mobile Endgerät (2) ausgestattet ist, ein Programminterface (6) umfasst, welches dazu ausgebildet ist, nach dem Start der Programmanwendung (5) im Wege eines Polling wiederholt anonyme Anfragen zur Nutzung des Dienstes auszusenden,
b.) das mindestens eine gemanagte Netz (1) Einrichtungen einer zentralen Lokalisierungsinstanz (4) umfasst, welche dazu ausgebildet sind, anhand einer durch einen trusted Netzwerkendpunkt (7) des mindestens einen gemanagten Netzes (1) weitergeleiteten anonymen Nutzungsanfrage eines mobilen Endgeräts (2) dessen Geolokalisation unter Rückgriff auf die Einrichtungen für das Ressourcenmanagement des Betreibers dieses gemanagten Netzes (1) zu ermitteln und an das anfragende mobile Endgerät (2), im Falle seines Aufenthalts in dem Nutzungsbereich, über den die anonyme Nutzungsanfrage übermittelnden trusted Netzwerkendpunkt (7) des gemanagten Netzes (1) ein digitales Kennzeichen zu übertragen, welches dem mobilen Endgerät (2) die anonyme Nutzung des Dienstes ermöglicht, solange zwischen diesem und dem trusted Netzwerkendpunkt (7) eine Verbindung besteht,,
c.) in dem für den Dienst festgelegten Nutzungsbereich mindestens ein, durch ein oder mehrere hardware- sowie softwarebasierte Einrichtungen ausgebildeter trusted Netzwerkendpunkt (7) angeordnet ist, welcher zum Empfang von anonymen Nutzungsanfragen mobiler Endgeräte (2), zu deren Weiterleitung an die zentrale Lokalisierungsinstanz (4) sowie zur Weiterleitung eines von der zentralen Lokalisierungsinstanz (4) ausgesendeten, die ortsgebundene anonyme Nutzung des Dienstes ermöglichenden digitalen Kennzeichens an ein diesen Dienst anforderndes, sich in dem Nutzungsbereich befindendes mobiles Endgerät (2) ausgebildet ist.

8. System nach Anspruch 7, **dadurch gekennzeichnet, dass**, es sich bei dem Netzwerk, in welchem der Dienst bereitgestellt wird, um ein IP-Netzwerk handelt.

9. System nach Anspruch 7 oder 8, **dadurch gekennzeichnet, dass** mindestens ein zur Weiterleitung von anonymen Nutzungsanfragen mobiler Endgeräte (2) an die zentrale Lokalisierungsinstanz (4) sowie zur Weiterleitung eines von der zentralen Lokalisierungsinstanz (4) ausgesendeten digitalen Kennzeichens an ein dieses anforderndes Endgerät (2) ausgebildeter trusted Netzwerkendpunkt (7) des gemanagten Netzes (1) außerdem zur Auslieferung eines im Rahmen der Dienstnutzung angeforderten Contents ausgebildet ist.

10. System nach Anspruch 9, **dadurch gekennzeichnet, dass** der mindestens eine in dem Nutzungsbereich angeordnete, zur Weiterleitung anonymer Nutzungsanfragen und von digitalen Kennzeichen für eine Dienstnutzung sowie zur Auslieferung eines im Rahmen der Dienstnutzung angeforderten Contents verwendete trusted Netzwerkendpunkt (7) des gemanagten Netzes (1) mit mindestens einem Cachespeicher für den Content ausgestattet ist.

11. System nach Anspruch 7 oder 8, **dadurch gekennzeichnet, dass** dieses zusätzlich mindestens drei in dem Nutzungsbereich angeordnete Beacons (9₁ - 9ₙ), nämlich Funksignale nach dem Bluetooth- oder dem Bluetooth-Low-Energy-Standard aussendende Sendeeinrichtungen, umfasst, welche bei dem im Nutzungsbereich angeordneten, zur Geolokalisierung sich darin aufhaltender Endgeräte (2) verwendeten trusted Netzwerkendpunkt (7) registriert sind.

## Claims

1. Method for the location-based provision of a service in a network for use by means of a mobile terminal (2) coupled to the network in wire-free fashion, in accordance with which the respective service rendered by at least one service device (3) likewise coupled to the network is provided only within a locally determined use area and is usable by means of a mobile terminal (2) situated in the use area and equipped with a processing unit, using a program application (5) that is started on said mobile terminal and processed by the processing unit, the presence of the mobile terminal (2) in the use area being ascertained by geolocalization of the mobile terminal (2), which is effected with the aid of trusted network endpoints (7) of at least one managed network (1) comprised by the network and maintained by an operator, the respective localization of which endpoints is known to the operator of the managed network (1), **characterized in that** after the program application (5) that enables the use of the service has been started,
a.) a program interface (6) of the program application processed by the processing unit of the mobile terminal (2) repeatedly transmits an anonymous use request for use of the service by way of polling,
b.) if the mobile terminal (2) is present in the use area, the anonymous use request is received by one of the trusted network endpoints (7) that are used for geolocalization and are arranged in the use area,
c.) the anonymous use request of the mobile terminal (2) is forwarded by the trusted network endpoint (7) that receives it to a central localization entity (4) belonging to the managed network (1),
d.) the central localization entity (4) determines the localization of the trusted network endpoint (7) that forwards the anonymous use request with recourse to resource management of the operator of the managed network (1), and
e.) provided that the localization determined in accordance with d.) is situated within the use area for the service, the central localization entity (4) communicates, via said trusted network endpoint (7), a digital identifier to the mobile terminal (2), which enables the anonymous use of the service within the scope of use rights defined for the trusted network endpoint (7) used for geolocalization, as long as there is a connection between the mobile terminal (2) and the trusted network endpoint (7).

2. Method according to Claim 1, **characterized in that** the provision of the service is effected via the trusted network endpoint (7) of the managed network (1) that also forwards the anonymous use request to the central localization entity (4) for the purpose of geolocalization.

3. Method according to Claim 1 or 2, **characterized in that** the service that is usable in location-based fashion relates to the location-based provision of content.

4. Method according to Claim 3, **characterized in that** the content for use is kept in a cache storage facility of devices with which the trusted network endpoint (7) used for geolocalization is equipped, via which the service that is usable in location-based fashion is provided, that is to say that the content is delivered, the content being transferred to said devices by the service device (3) originally keeping it prior to or in connection with the first time said content is requested.

5. Method according to Claim 1 or 2, **characterized in that** in order to increase the accuracy of the geolocalization effected by means of a trusted network endpoint (7) of a managed network (1) and the central localization entity (4), other localization techniques are additionally included.

6. Method according to Claim 5, **characterized in that** in order to increase the accuracy of the geolocalization, beacons (9₁ - 9ₙ), namely transmitting devices that transmit radio signals according to the Bluetooth standard or the Bluetooth Low Energy standard, are arranged within a use area provided for the location-based provision of the service and are registered with the trusted network endpoint (7) used for geolocalization, and **in that** by means of a mobile terminal (2) that transmits anonymous use requests within the use area, additional localization information is obtained from the radio signals received from the beacons (9₁ - 9ₙ) by way of cross-bearing or triangulation and is communicated via the trusted network endpoint (7) used for geolocalization to the central localization entity (4) in order to refine its localization result.

7. System for the location-based provision of a service in a network, comprising at least one managed network (1) that belongs to the network and has devices for resource management, comprising at least one mobile terminal (2) which has a processing unit and is to be coupled to the network in wire-free fashion via trusted network endpoints (7) of the managed network (1) maintained by an operator and by means of which the service provided is usable within a locally determined use area, and comprising at least one network-enabled service device (3) coupled to the network for the purpose of providing the service, the at least one mobile terminal (2) being equipped with a program application (5) that is to be started for use of the service and is processable by the processing unit of said at least one mobile terminal, **characterized in that**
a.) the program application (5) with which the at least one mobile terminal (2) is equipped comprises a program interface (6) designed to repeatedly transmit anonymous requests for use of the service by way of polling after the program application (5) has started,
b.) the at least one managed network (1) comprises devices of a central localization entity (4) that are designed, on the basis of an anonymous use request of a mobile terminal (2) forwarded by a trusted network endpoint (7) of the at least one managed network (1), to determine the geolocalization of said mobile terminal with recourse to the devices for resource management of the operator of said managed network (1) and to transfer a digital identifier to the requesting mobile terminal (2), in the case of its being located in the use area, via the trusted network endpoint (7) of the managed network (1) that communicates the anonymous use request, said digital identifier enabling the anonymous use of the service for the mobile terminal (2) as long as there is a connection between said mobile terminal and the trusted network endpoint (7),
c.) at least one trusted network endpoint (7) formed by one or more hardware- and software-based devices is arranged in the use area defined for the service and is designed for receiving anonymous use requests of mobile terminals (2), for forwarding them to the central localization entity (4) and for forwarding a digital identifier transmitted by the central localization entity (4), said digital identifier enabling the location-based anonymous use of the service, to a mobile terminal (2) requesting this service and situated in the use area.

8. System according to Claim 7, **characterized in that** the network in which the service is provided is an IP network.

9. System according to Claim 7 or 8, **characterized in that** at least one trusted network endpoint (7) of the managed network (1) that is designed for forwarding anonymous use requests of mobile terminals (2) to the central localization entity (4) and for forwarding a digital identifier transmitted by the central localization entity (4) to a terminal (2) requesting said digital identifier is additionally designed for delivering content requested in the context of the service use.

10. System according to Claim 9, **characterized in that** the at least one trusted network endpoint (7) of the managed network (1) that is arranged in the use area and is used for forwarding anonymous use requests and digital identifiers for a service use and for delivering content requested in the context of the service use is equipped with at least one cache storage facility for the content.

11. System according to Claim 7 or 8, **characterized in that** this system additionally comprises at least three beacons (9₁ - 9ₙ), namely transmitting devices that transmit radio signals according to the Bluetooth standard or the Bluetooth Low Energy standard, which are arranged in the use area and are registered with the trusted network endpoint (7) that is arranged in the use area and is used for geolocalization of terminals (2) located therein.

## Revendications

1. Procédé de mise à disposition spécifique à un lieu d'un service dans un réseau pour l'utilisation au moyen d'un terminal mobile (2) couplé au réseau par liaison non filaire, selon lequel le service respectif, fourni par au moins un dispositif de service (3) également couplé au réseau, n'est mis à disposition qu'à l'intérieur d'une zone d'utilisation déterminée localement et peut être utilisé par l'intermédiaire d'un terminal mobile (2), qui se trouve dans la zone d'utilisation et équipé d'une unité de traitement, en utilisant une application de programme (5) démarrée sur celui-ci et traitée par l'unité de traitement, la présence du terminal mobile (2) dans la zone d'utilisation étant constatée par géolocalisation du terminal mobile (2), laquelle est effectuée à l'aide de points de terminaison de réseau (7) de confiance d'au moins un réseau géré (1), couvert par le réseau et maintenu par un exploitant, dont la localisation respective est connue de l'exploitant du réseau géré (1), **caractérisé en ce qu'**après le démarrage de l'application de programme (5) qui rend possible l'utilisation du service,
a) une demande d'utilisation anonyme en vue de l'utilisation du service est envoyée de manière répétitive au moyen de la scrutation par une interface de programme (6) de l'application de programme traitée par l'unité de traitement du terminal mobile (2),
b) en cas de présence du terminal mobile (2) dans la zone d'utilisation, la demande d'utilisation anonyme est reçue par l'un des points de terminaison de réseau (7) de confiance utilisés pour la géolocalisation et disposés dans la zone d'utilisation,
c) la demande d'utilisation anonyme du terminal mobile (2) est retransmise par le point de terminaison de réseau (7) de confiance qui l'a reçue à une instance de localisation centrale (4) faisant partie du réseau géré (1),
d) la localisation du point de terminaison de réseau (7) de confiance qui retransmet la demande d'utilisation anonyme est identifiée par l'instance de localisation centrale (4) en ayant recours à une gestion des ressources de l'exploitant du réseau géré (1) et
e) dans la mesure où la localisation identifiée selon d) se trouve à l'intérieur de la zone d'utilisation pour le service, un identifiant numérique est communiqué au terminal mobile (2) par l'instance de localisation centrale (4) par le biais de son point de terminaison de réseau (7) de confiance, lequel rend possible l'utilisation anonyme du service dans l'étendue des droits d'utilisation spécifiés pour le point de terminaison de réseau (7) de confiance utilisé pour la géolocalisation tant qu'une liaison existe entre le terminal mobile (2) et le point de terminaison de réseau (7) de confiance.

2. Procédé selon la revendication 1, **caractérisé en ce que** la mise à disposition du service s'effectue par le biais du point de terminaison de réseau (7) de confiance du réseau géré (1) qui retransmet également la demande d'utilisation anonyme à des fins de géolocalisation à l'instance de localisation centrale (4).

3. Procédé selon la revendication 1 ou 2, **caractérisé en ce que** le service utilisable spécifiquement à un lieu se rapporte à la mise à disposition spécifique à un lieu d'un contenu.

4. Procédé selon la revendication 3, **caractérisé en ce que** le contenu destiné à l'utilisation est maintenu dans une mémoire cache par des dispositifs desquels est équipé le point de terminaison de réseau (7) de confiance utilisé pour la géolocalisation, par le biais desquels le service utilisable spécifiquement à un lieu est mis à disposition, c'est-à-dire le contenu délivré, le contenu étant transmis à ces dispositifs par le dispositif de service (3) qui le maintenait initialement avant ou en relation avec sa première demande.

5. Procédé selon la revendication 1 ou 2, **caractérisé en ce que** pour augmenter la précision de la géolocalisation effectuée au moyen d'un point de terminaison de réseau (7) de confiance d'un réseau géré (1) et de l'instance de localisation centrale (4), d'autres techniques de localisation sont en plus impliquées.

6. Procédé selon la revendication 5, **caractérisé en ce que** pour augmenter la précision de la géolocalisation, des balises (9₁ - 9ₙ), à savoir des dispositifs d'émission qui émettent des signaux radioélectriques selon la norme Bluetooth ou Bluetooth à basse consommation, sont disposées à l'intérieur d'une zone d'utilisation prévue pour la mise à disposition du service, lesquelles sont enregistrées auprès du point de terminaison de réseau (7) de confiance utilisé pour la géolocalisation et **en ce qu'**une information de localisation supplémentaire est obtenue au moyen d'un terminal mobile (2) émettant des demandes d'utilisation anonymes à l'intérieur de la zone d'utilisation à partir des signaux radioélectriques reçus par les balises (9₁ - 9ₙ) au moyen d'un relèvement croisé ou d'une triangulation, puis communiquée à l'instance de localisation centrale (4) par le biais du point de terminaison de réseau (7) de confiance utilisé pour la géolocalisation en vue d'affiner son résultat de localisation.

7. Système de mise à disposition spécifique à un lieu d'un service dans un réseau, comprenant au moins un réseau géré (1) disposant de dispositifs pour une gestion des ressources et faisant partie du réseau, comprenant au moins un terminal mobile (2), à coupler au réseau par liaison non filaire par le biais de points de terminaison de réseau (7) de confiance du réseau géré (1) maintenu par un exploitant et possédant une unité de traitement, au moyen duquel le service respectif mis à disposition est utilisé à l'intérieur d'une zone d'utilisation déterminée localement et comprenant au moins un dispositif de service (3) apte à fonctionner en réseau et couplé au réseau en vue de la mise à disposition du service, l'au moins un terminal mobile (2) étant équipé d'une application de programme (5) qui peut être traitée par son unité de traitement et devant être démarrée pour l'utilisation du service, **caractérisé en ce que**,
a) l'application de programme (5) de laquelle est équipé l'au moins un terminal mobile (2) comporte une interface de programme (6), laquelle est configurée pour, après le démarrage de l'application de programme (5), émettre des demandes d'utilisation anonyme d'utilisation du service de manière répétitive au moyen d'une scrutation,
b) l'au moins un réseau géré (1) comporte des dispositifs d'une instance de localisation centrale (4), lesquels sont configurés pour, à l'aide d'une demande d'utilisation anonyme d'un terminal mobile (2), retransmise par un point de terminaison de réseau (7) de confiance de l'au moins un réseau géré (1), identifier sa géolocalisation en ayant recours aux dispositifs pour la gestion des ressources de l'exploitant de ce réseau géré (1) et transmettre au terminal mobile (2) demandeur, dans le cas de son séjour dans la zone d'utilisation, par le biais du point de terminaison de réseau (7) de confiance du réseau géré (1) qui communique la demande d'utilisation anonyme, un identifiant numérique rend possible l'utilisation anonyme du service par le terminal mobile (2) tant qu'une liaison existe entre celui-ci et le point de terminaison de réseau (7) de confiance,
c) au moins un point de terminaison de réseau (7) de confiance, formé par un ou plusieurs dispositifs à base de matériel ainsi que de logiciel, est disposé dans la zone d'utilisation spécifiée pour le service, lequel est configuré pour la réception de demandes d'utilisation anonymes de terminaux mobiles (2), pour leur retransmission à l'instance de localisation centrale (4) ainsi que pour la retransmission d'un identifiant numérique, émis par l'instance de localisation centrale (4) et rendant possible l'utilisation anonyme du service spécifique au lieu, à un terminal mobile (2) demandant ce service et se trouvant dans la zone d'utilisation.

8. Système selon la revendication 7, **caractérisé en ce que** le réseau dans lequel le service est mis à disposition est un réseau IP.

9. Système selon la revendication 7 ou 8, **caractérisé en ce qu'**au moins un point de terminaison de réseau (7) de confiance du réseau géré (1), configuré pour la retransmission de demandes d'utilisation anonymes de terminaux mobiles (2) à l'instance de localisation centrale (4) ainsi que pour la retransmission d'un identifiant numérique émis par l'instance de localisation centrale (4) à un terminal (2) qui la demande, est en outre configuré pour délivrer un contenu demandé dans le cadre de l'utilisation du service.

10. Système selon la revendication 9, **caractérisé en ce que** l'au moins un point de terminaison de réseau (7) de confiance du réseau géré (1), disposé dans la zone d'utilisation, utilisé pour la retransmission de demandes d'utilisation anonymes et d'identifiants numériques pour une utilisation du service ainsi que pour la délivrance d'un contenu demandé dans le cadre de l'utilisation du service, est équipé d'au moins une mémoire cache pour le contenu.

11. Système selon la revendication 7 ou 8, **caractérisé en ce que** celui-ci comporte en plus au moins trois balises (9₁ - 9ₙ), à savoir des dispositifs d'émission qui émettent des signaux radioélectriques selon la norme Bluetooth ou Bluetooth à basse consommation, disposées à l'intérieur d'une zone d'utilisation, lesquelles sont enregistrées auprès du point de terminaison de réseau (7) de confiance disposé dans la zone d'utilisation et utilisé pour la géolocalisation des terminaux mobiles (2) qui y séjournent.
